# EUROPEAN PATENT SPECIFICATION

(11) **EP 2 307 783 B1**
(45) Date of publication and mention of the grant of the patent: **02.09.2015**
(21) Application number: 09772824.0
(22) Date of filing: 08.06.2009
(51) Int. Cl.: F16L 58/04

(54) **PIPE COATING**
ROHRBESCHICHTUNG
REVÊTEMENT DE TUYAU

(30) Priority: 02.07.2008 GB 0812071
(43) Date of publication of application: 13.04.2011
(73) Proprietor: Pipeline Technique Limited, Aberdeenshire AB54 4PS (GB)
(72) Inventor: HUTT, Graham, F-34320 Nizas (FR)
(74) Representative: Crosby, Wendy Agnes
(86) International application number: PCT/GB2009/050633
(87) International publication number: WO 2010/001144

(56) References cited:
- WO-A2-2008/122879
- FR-A1- 2 723 006
- GB-A- 2 077 140
- US-A1- 2002 066 491

## Description

This invention relates to a method of coating a pipe and more specifically to a method of coating a pipe to modify the surface of the pipe to be fabricated into the construction of an underwater pipeline or riser system. More preferably, the method is used in coating pipes to be installed by a pipelay ship during the construction of a pipeline or riser system.

It is common practice to protect underwater pipelines using a variety of polymer based coating systems to provide corrosion protection and/or thermal insulation to the pipeline. Coatings of this type are normally applied to individual lengths of pipe in a factory or other coating facility and then sent to the lay ship for fabrication into the pipeline.

During the offshore pipeline fabrication process, it is customary to protect the area at the junction between the individual lengths of pipe, which is typically a weld or mechanical connection, using a compatible polymeric material. This area between the ends of the factory applied coating is termed the "field joint coating".

The surfaces of such coatings, both pipe and field joint, may be relatively smooth resulting in a low coefficient of friction when gripped in the device used for restraining the pipelay tension.

Moreover, the surface of the coating may deteriorate further as a result of contamination from oil, grease, moisture or other such substances during transport, handling, storage or pipeline fabrication.

Application techniques have been developed whereby the parameters for the deposition of the final layer of polymer are adjusted to give partial fusion of particles to produce a so-called 'rough-coat'.

Whilst this method may bring about certain improvements, it is difficult to specify and control a consistent quality of surface finish. Moreover, the field joint areas of the fabricated pipeline are not similarly treated.

For the purposes of pipe laying it is preferable to have a means to provide an increased and controlled surface roughness to enhance the gripping capacity to bring about benefits including:
- avoiding slippage and the attendant technical risk to integrity of the pipe and/or safety of the operation;
- increasing the magnitude of the tension that may be resisted and therefore to increase the maximum depth of water for installation of the pipeline or riser system.

According to one aspect of the present invention there is provided a method of increasing the surface roughness of a coated pipe comprising the steps of heating the outer surface of the pipe coating to a molten state and subsequently applying a particulate material to the outer surface of the pipe including the field joint coating at the ends of the pipe.

The increase in the surface roughness facilitates higher resistance to slippage in a pipelay device such as a tensioner used for restraining the tension in the pipe catenary between the lay ship and the seabed. Advantageously, the particulate material is bonded to or embedded into the outer surface of the pipe coating and field joint coating.

Preferably, the particulate material protrudes about the surface of the pipe coating and field joint coating by between 0.5 and 3mm.

Preferably also, the particle distribution on the surface of the pipe coating and field joint coating is at least 12 protrusions per cm² over the area of application.

Conveniently, the particulate material is a granular media.

Preferably, the application step is completed immediately prior to the fabricated pipeline entering a tensioner device on a pipe laying vessel.

Preferably, the particulate material is polymeric, metallic or non-metallic in nature.

Advantageously the method further includes the step of cleaning the outer surface of the pipe coating prior to application of the particulate media.

In the preferred embodiment the outer surface of the pipe coating is heated with a hot gas gun.

According to a further aspect of the present invention there is provided a pipe comprising a coating to which a particulate material has been applied in accordance with the method of the first aspect of the invention.

An embodiment of the present invention will now be described. This embodiment uses a factory coated pipe which may have a polymer based coating applied in anticipation of fabrication of the pipe into a subsea pipeline.

The outer surface of the pipe coating is modified by the application of a particulate media to the outermost coating layer of the pipe. In this embodiment the selected media is a granular form of a thermoset polymer which is applied by a coating apparatus such as in a pipe coating facility.

The outer surface of the pipe coating including the field joint is initially cleaned, for example by application of a solvent, and then prepared by scouring with a rotary wire brush. This step may be completed by rotating the pipe past a suitable cleaning station. The outer surface of the pipe coating is then brought into a molten state for example by the use of a hot gas heating gun.

The pipe is then traversed past a dispensing device such as a spray apparatus which has one or more outlets or nozzles through which particles of the thermoset polymer are projected into the melt by a gas stream.

The surface of the pipe is then quenched using a stream of air or other suitable fluid such as gas or liquid. This provides for rapid cooling of the outer surface of the pipe. In some embodiments, the quenching step may provide for development of a bond between the thermoset polymer and the surface of the pipe coating. In some embodiments of the invention, the particulate material may be partially encapsulated in the surface of the pipe coating with only a portion of each particle protruding above the surface of the pipe coating.

In the preferred embodiment the particles protrude above the surface of the pipe coating by about 0.5 to 3mm.

The protrusion of the particles above the natural surface of the pipe can be regulated by the particle size and degree of embedment. The particle size distribution of the feedstock of the particulate material can be specified. The degree of embedment of the particles may be controlled by the depth of fusion of the substrate and the velocity of projection of the particles.

The pattern of distribution of the particulate media can be modified by controlling the speed of pipe movement through the coating apparatus. However, it is preferred that the particle distribution on the surface of the coated pipe and field joint is at least twelve protrusions per cm² over the area of application.

The application apparatus disposition, motion and application parameters may be regulated to produce the desired particle distribution density or pattern. This may include synchronisation with the movements of the pipe.

The application apparatus disposition, motion and application parameters may be regulated to produce the desired particle penetration/projection at or near the surface without degrading properties.

Whilst the preferred method provides for movement of the pipe past a cleaning station and/or coating apparatus, alternatively, in some embodiments, the pipe can be held static and the cleaning station and/or coating apparatus can move relative to the pipe.

In one embodiment, the application of the particulate media is completed immediately prior to the fabricated pipeline entering the tensioner device on a vessel. In this embodiment, the coating apparatus is carried on board the vessel and the lengths of pipe are coated and fabricated into the pipeline on board.

The vessel may also be adapted to carry cleaning apparatus to prepare pipes for coating. Alternatively, the pipes may be cleaned as described above prior to storage on the vessel and prior to transport to the required laying location. This reduces the requirement to carry cleaning apparatus on the vessel and saves on space to allow further pipes to be carried to the required location.

For the purpose of application immediately prior to entering the tensioner device, it is preferred that further quenching of the surface of the pipe is provided to allow the particulate material to embed within the pipe coating before the pipe enters the tensioner device. Means may be provided for accelerated curing of the particles within the surface of the pipe.

Furthermore, in this embodiment, it is preferred that the pipe moves longitudinally past the cleaning and coating apparatus without rotating. The desired pattern of particles may require either movement of the application device circumferentially or static, multiple nozzles disposed around the pipe.

In some embodiments of the present invention, the particulate material comprises polymeric, metallic or non-metallic particles and is typically selected on the basis of a number of different characteristics including but not limited to the capability of bonding or embedment and having a geometric form such as shape, size distribution, angularity and hardness to maximise the gripping action of the tensioner device.

Furthermore, the particulate material typically has adequate resistance to crushing and shear such that a sufficient proportion of the particulate material remains intact during passage of the pipe through the tensioner device.

Preferably the particulate material does not produce by-products or debris that cannot be readily controlled and which may be potentially harmful to other equipment, health or the environment.

The technological properties of the particulate material may be selected to optimise performance of the pipe coating. For example, the particulate material may be chemically inert or hydrophobic in nature.

Additionally the surface of the tensioner device which may be either metallic or non-metallic and may be selected in combination with the selected media to further optimise performance.

Application of the particulate material may be by any suitable means of adhesion, fusion or embeddement to develop the required bond strength. Preferably the application of the particulate material ensures that a proportion of the particles at or near the surface of the pipe coating will come in to contact with the surface of the tensioner device at the applied pressure.

The particulate material may for example be applied via adhesion, thermal fusion of the surface, thermal spraying or high velocity projection. Cleaning of the pipe coating may in some embodiments be carried out by application of steam, a solvent, water jet or plasma to the surface of the pipe.

It will be appreciated that the present invention provides a method of modifying the surface of a coated pipe to increase the roughness of the surface in a controlled manner, thereby avoiding slippage of a coated pipe particularly when the coated pipe is gripped by a tensioner device.

The magnitude of the tension that may be resisted is also increased and therefore the maximum depth of water in which installation of a pipeline or riser system coated in such an application is also increased.

It will further be appreciated that the present invention provides a method of coating an entire length of pipe including field joints. Alternatively the field joints of the pipe can be coated selectively.

Additionally, the pipes may be modified at any time after a factory coating is applied and therefore the present invention may form part of a planned phase of operations or introduced retrospectively. Factory coated pipes may be coated onshore and transported by vessel to the required location for fabrication into the pipeline. Alternatively, the factory coated pipes may be transported on the vessel and modified only prior to being fabricated into the pipeline. This can ensure that the precise characteristics of the pipe coating can be selected to suit the particular requirements for the pipeline into which the pipe length is to be fabricated.

## Claims

1. A method of increasing the surface roughness of a coated pipe comprising the steps of heating the outer surface of the pipe coating to a molten state and subsequently applying a particulate material to the outer surface of the pipe including the field joint coating at the ends of the pipe.

2. A method according to claim 1, wherein the particulate material is bonded to or embedded into the outer surface of the pipe coating and field joint coating.

3. A method according to claim 1 or 2, wherein the particulate material protrudes about the surface of the pipe coating and field joint coating by between 0.5 and 3mm.

4. A method according to any of the preceding claims, wherein the particle distribution on the surface of the pipe coating and field joint coating is at least 12 protrusions per cm² over the area of application.

5. A method according to any of the preceding claims, wherein the particulate material is a granular media.

6. A method according to any of the preceding claims, wherein the application step is completed immediately prior to the fabricated pipeline entering a tensioner device on a pipe laying vessel.

7. A method according to any of the preceding claims, wherein the particulate material is polymeric, metallic or non-metallic in nature.

8. A method according to any of the preceding claims, wherein the method further includes the step of cleaning the outer surface of the pipe coating prior to application of the particulate media.

9. A method according any of claims 1-8, wherein the heating step comprises heating the outer surface of the pipe coating with a hot gas gun.

10. A pipe comprising a coating to which a particulate material has been applied in accordance with any of claims 1-9.

## Patentansprüche

1. Ein Verfahren zum Erhöhen der Oberflächenrauigkeit eines beschichteten Rohrs, beinhaltend die Schritte des Erwärmens der Außenfläche der Rohrbeschichtung bis zu einem geschmolzenen Zustand und des anschließenden Auftragens eines teilchenförmigen Materials auf die Außenfläche des Rohrs, einschließlich der Field-Joint-Beschichtung an den Enden des Rohrs.

2. Verfahren gemäß Anspruch 1, wobei das teilchenförmige Material mit der Außenfläche der Rohrbeschichtung und Field-Joint-Beschichtung verklebt oder darin eingebettet ist.

3. Verfahren gemäß Anspruch 1 oder 2, wobei das teilchenförmige Material um zwischen 0,5 und 3 mm um die Oberfläche der Rohrbeschichtung und Field-Joint-Beschichtung ragt.

4. Verfahren gemäß einem der vorhergehenden Ansprüche, wobei die Teilchenverteilung auf der Oberfläche der Rohrbeschichtung und Field-Joint-Beschichtung mindestens 12 Vorsprünge pro cm² über den Auftragungsbereich beträgt.

5. Verfahren gemäß einem der vorhergehenden Ansprüche, wobei das teilchenförmige Material ein granuläres Medium ist.

6. Verfahren gemäß einem der vorhergehenden Ansprüche, wobei der Auftragungsschritt unmittelbar vor dem Eintritt der gefertigten Rohrleitung in eine Spannvorrichtung auf einem Rohrverlegeschiff abgeschlossen wird.

7. Verfahren gemäß einem der vorhergehenden Ansprüche, wobei das teilchenförmige Material von polymerer, metallischer oder nicht-metallischer Art ist.

8. Verfahren gemäß einem der vorhergehenden Ansprüche, wobei das Verfahren ferner den Schritt des Reinigens der Außenfläche der Rohrbeschichtung vor dem Auftragen der teilchenförmigen Medien umfasst.

9. Verfahren gemäß einem der Ansprüche 1-8, wobei der Erwärmungsschritt das Erwärmen der Außenfläche der Rohrbeschichtung mit einer Heißgaspistole beinhaltet.

10. Ein eine Beschichtung beinhaltendes Rohr, auf das ein teilchenförmiges Material gemäß einem der Ansprüche 1-9 aufgetragen worden ist.

## Revendications

1. Une méthode pour augmenter la rugosité de surface d'un tuyau revêtu comprenant les étapes consistant à chauffer la surface externe du revêtement de tuyau jusqu'à un état fondu et à appliquer subséquemment une matière particulaire sur la surface externe du tuyau incluant le revêtement de raccord au niveau des extrémités du tuyau.

2. Une méthode selon la revendication 1, dans laquelle la matière particulaire est liée à ou intégré dans la surface externe du revêtement de tuyau et du revêtement de raccord.

3. Une méthode selon la revendication 1 ou la revendication 2, dans laquelle la matière particulaire fait saillie autour de la surface du revêtement de tuyau et du revêtement de raccord sur entre 0,5 et 3 mm.

4. Une méthode selon n'importe lesquelles des revendications précédentes, dans laquelle la distribution de particules sur la surface du revêtement de tuyau et du revêtement de raccord est d'au moins 12 saillies par cm² sur la surface d'application.

5. Une méthode selon n'importe lesquelles des revendications précédentes, dans laquelle la matière particulaire est un milieu granulaire.

6. Une méthode selon n'importe lesquelles des revendications précédentes, dans laquelle l'étape d'application est terminée immédiatement avant que le pipeline fabriqué n'entre dans un dispositif tensionneur sur un bateau de pose de tuyaux.

7. Une méthode selon n'importe lesquelles des revendications précédentes, dans laquelle la matière particulaire est de nature polymérique, métallique ou non métallique.

8. Une méthode selon n'importe lesquelles des revendications précédentes, la méthode incluant en outre l'étape consistant à nettoyer la surface externe du revêtement de tuyau avant l'application du milieu particulaire.

9. Une méthode selon n'importe lesquelles des revendications 1 à 8, dans laquelle l'étape consistant à chauffer comprend le fait de chauffer la surface externe du revêtement de tuyau avec un pistolet à gaz chaud.

10. Un tuyau comprenant un revêtement sur lequel une matière particulaire a été appliquée conformément à n'importe lesquelles des revendications 1 à 9.
